# EUROPEAN PATENT SPECIFICATION

(11) **EP 3 167 687 B1**
(45) Date of publication and mention of the grant of the patent: **25.12.2019**
(21) Application number: 15819730.1
(22) Date of filing: 23.06.2015
(51) Int. Cl.: H04W 76/12, H04W 12/08, H04L 29/06, H04W 92/16, H04W 88/16, H04W 92/14

(54) **NETWORK NODE AND METHOD FOR CO-LOCATED EPDG AND PGW FUNCTIONS**
NETZWERKKNOTEN UND VERFAHREN FÜR BENACHBARTE EPDG- UND PGW-FUNKTIONEN
NOEUD DE RÉSEAU ET PROCÉDÉ DESTINÉS À DES FONCTIONS EPDG ET PGW CO-IMPLANTÉES

(30) Priority: 11.07.2014 US 201414328779
(43) Date of publication of application: 17.05.2017
(73) Proprietor: Mavenir Systems, Inc., Wilmington DE 19801 (US)
(72) Inventor: SINGH, Mandeep, Allen, TX 75002 (US); SHARMA, Anish, Richardson, TX 75080 (US)
(74) Representative: McDougall, James
(86) International application number: PCT/US2015/037124
(87) International publication number: WO 2016/007279

(56) References cited:
- US-A1- 2010 232 353
- US-A1- 2011 216 743
- US-A1- 2012 106 554
- US-A1- 2013 058 275
- NORTEL: "ePDG selection", 3GPP DRAFT; S2-071975 EPDG SELECTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Beijing; 20070418, 18 April 2007 (2007-04-18), XP050259709, [retrieved on 2007-04-18]
- ERICSSON: "GW selection for LTE and non-3GPP accesses", 3GPP DRAFT; S2-071738-GWSELECTION_LTE_NON3GPP.PA7, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Beijing; 20070418, 18 April 2007 (2007-04-18), XP050259498, [retrieved on 2007-04-18]

## Description

### FIELD

The present disclosure relates to a network node and a method for co-located ePDG (Evolved Packet Data Gateway) and PGW (PDN Gateway) Functions.

### BACKGROUND

The Third Generation Partnership Project (3GPP) unites six telecommunications standards bodies, known as "Organizational Partners," and provides their members with a stable environment to produce the highly successful Reports and Specifications that define 3GPP technologies. A mobile device, also called a User Equipment (UE), may operate in a wireless communication network that provides high-speed data and/or voice communications. The wireless communication networks may implement circuit-switched (CS) and/or packet-switched (PS) communication protocols to provide various services. For example, the UE may operate in accordance with one or more of an Code Division Multiple Access (CDMA) networks, Time Division Multiple Access (TDMA) networks, Frequency Division Multiple Access (FDMA) networks, Orthogonal FDMA (OFDMA) networks, Single-Carrier FDMA (SC-FDMA) networks, etc. The terms "networks" and "systems" are often used interchangeably. A CDMA network may implement a radio technology such as Universal Terrestrial Radio Access (UTRA), cdma2000, etc. UTRA: includes Wideband-CDMA (W-CDMA) and Low Chip Rate (LCR) cdma2000 covers IS-2000, IS-95 and IS-856 standards. A TDMA network may implement a radio technology such as Global System for Mobile Communications (GSM). An OFDMA network may implement a radio technology such as Evolved UTRA (E-UTRA), IEEE 802.11, IEEE 802.16, IEEE 802.20, Flash-OFDM®, etc. UTRA, E-UTRA, and GSM are part of Universal Mobile Telecommunication System (UMTS). Long-Term Evolution (LTE) is a new release of UMTS that uses E-UTRA. UTRA, E-UTRA, GSM, UMTS and LTE are described in specification documents from an organization named "3rd Generation Partnership Project" (3GPP). These various radio technologies and standards are known in the art.

The Evolved Packet Core (EPC) is the latest evolution of the 3GPP core network architecture first introduced in Release 8 of the standard. In EPC, the user data and the signaling data are separated into the user plane and the control plane. The EPC is composed of four basic network elements: the Serving Gateway (SGW), the Packet Data Network Gateway (PDN GW or PGW), the Mobility Management Entity (MME), and the Home Subscriber Server (HSS). The EPC is connected to external networks, which can include the IP Multimedia Core Network Subsystem (IMS).

3GPP Draft from Nortel, entitled "ePDG Selection" and with reference number S2-071975 discloses allowing discovery of a specific ePDG function that is collocated with a specific PDN GW in order to avoid unnecessary exhibiting of an S2b instance.

3GPP Draft from Ericsson, entitled "GW Selection for LTE and Non-3GPP Accesses" and with reference number S2-071738 discloses that in SAE architecture, the ePDN may be co-located with the PDN GW. The W-APN specified by the UE should be resolved into the address of the co-located PDN GW and ePDN.

### SUMMARY

In a first aspect, the present invention provides a network node as defined by independent claim 1. In a further aspect, the present invention provides a method as defined by independent claim 8.

### BRIEF DESCRIPTION OF THE DRAWINGS

FIG. 1 is a simplified block diagram of an exemplary Evolved Packet System (EPS) network architecture according to the present disclosure;
FIG. 2 is a simplified block diagram of network nodes in an EPC including an ePDG to provide access to a UE over an untrusted non-3GPP access network;
FIG. 3 is a simplified block diagram of an exemplary embodiment of co-located ePDG and PGW functionalities configured to provide access to a UE over an untrusted non-3GPP access network according to the present disclosure;
FIGURE 4 is a more detailed block diagram of an exemplary embodiment of co-located ePDG and PGW functions according to the present disclosure;
FIG. 5 is a simplified flowchart of an exemplary process performed in the co-located ePDG/PGW node according to the present disclosure; and
FIG. 6 is a simplified flowchart of another exemplary process performed in the co-located ePDG/PGW node according to the present disclosure.

### DETAILED DESCRIPTION

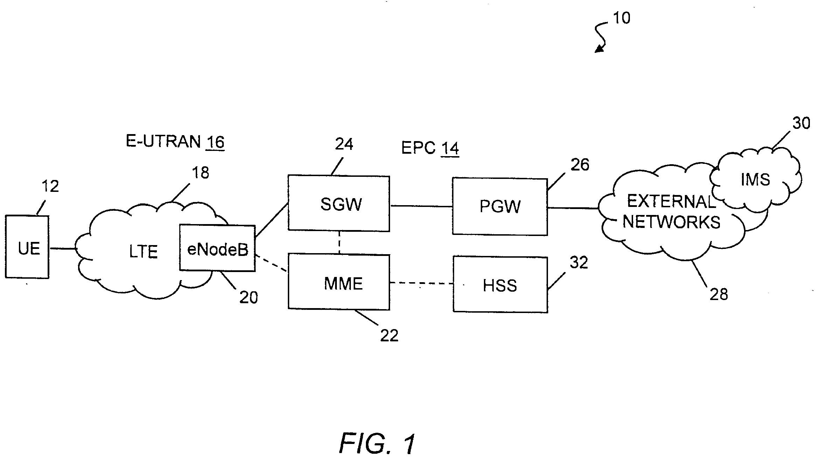

FIG. 1 is a simplified diagram illustrating an Evolved Packet System (EPS) 10. The EPS 10 may include one or more user equipment (UE) 12 accessing the Evolved Packet Core (EPC) 14 over an Evolved UMTS Terrestrial Radio Access Network (E-UTRAN) 16, an access network in LTE (Long Term Evolution) 18. The E-UTRAN 16 includes at least one evolved Node B (eNodeB) transceiver 20. The eNodeB 20 provides user plane and control plane protocol termination toward the UE 12. The eNodeB 20 may be connected to other eNodeBs via a backhaul (e.g., an X2 interface; not shown).

The eNodeB 20 are also commonly referred to as a base station, a base transceiver station, a radio base station, a radio transceiver, a transceiver function, a basic service set (BSS), and an extended service set (ESS). The eNodeB 20 provides an access point to the EPC 14 for a UE 12. Examples of an UE 12 include a cellular phone, a smart phone, a session initiation protocol (SIP) phone, a laptop, a personal digital assistant (PDA), a satellite radio, a global positioning system, a multimedia device, a video device, a digital audio player (e.g., MP3 player), a camera, a game console, or any other similar functioning device. The UE 12 may also be referred to by those skilled in the art as a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology.

The eNodeB 20 is connected by an S1 interface to the EPC 14. The EPC 14 includes a Mobility Management Entity (MME) 22, other MMEs, a Serving Gateway (SGW) 24, and a Packet Data Network (PDN) Gateway (PGW) 26. The MME 22 is a node in the control plane that processes the signaling related to mobility and security between the UE 12 and the EPC 14. Generally, the MME 22 provides bearer and connection management. The gateway nodes 24 and 26 are in the user plane, and transport IP data traffic between the UE 12 and the external networks 28. All user IP packets are transferred through the SGW 24 and the PGW 26. The SGW 24 is the connection point between the radio-side and the EPC 14, and routes and forwards user IP data packets while also acting as the mobility anchor for the user plane during inter-eNodeB handovers, and as the anchor for mobility between LTE and other 3GPP technologies. The PGW 26 is the connection point between the EPC 14 and the external networks 28, and provides IP address allocation as well as other functions for the UE 12. The PGW 26 is connected to external IP networks 28 that may include, for example, the Internet, the Intranet, an IP Multimedia Subsystem (IMS) 30, and a PS Streaming Service (PSS). A UE 12 may have simultaneous connectivity with more than one PGW for accessing multiple Packet Data Networks. The PGW 26 further performs additional functions such as policy enforcement, packet filtering for each user, charging support, lawful interception, and packet screening.

The EPC 14 further includes the Home Subscriber Server (HSS) 32, which is primarily a database that contains user-related and subscriber-related information. It also provides support functions in mobility management, call and session setup, user authentication, and access authorization.

It should be noted that the radio access network may communicate with the EPC 14 via one or a combination of gateway nodes, including the PGW, SWG, and a HRPD serving gateway (HSGW).

Although the UE 12 can reach the EPC 14 using E-UTRAN 16, other access technologies are also specified by 3GPP. Existing 3GPP radio access networks are supported. 3GPP specifications define how the interworking is achieved between an E-UTRAN (LTE and LTE-Advanced), GERAN (radio access network of GSM/GPRS) and UTRAN (radio access network of UMTS-based technologies WCDMA and HSPA). The EPS 10 also allows non-3GPP technologies to interconnect the UE 12 and the EPC 14. The term "non-3GPP" means that these access technologies were not specified in the 3GPP. These include, e.g., WiMAX, cdma2000, WLAN and fixed networks. Non-3GPP access technologies can be further classified as "trusted" and "untrusted" access networks. Trusted non-3GPP accesses can interface directly with the EPC 14. However, untrusted non-3GPP accesses interwork with the EPC 14 via a network entity called the ePDG (Evolved Packet Data Gateway). The main role of the ePDG is to provide security mechanisms such as IP Security (IPsec) tunneling of connections with the UE 12 over an untrusted non-3GPP network access, such as CDMA and WLAN technologies.

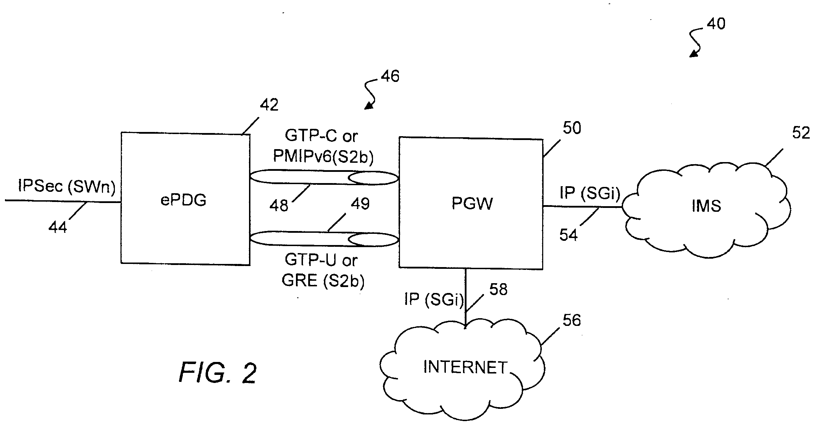

FIG. 2 is a simplified block diagram of network nodes in an EPC 40 including an ePDG 42 to provide access to a UE over an untrusted non-3GPP access network. The ePDG 42 is configured to implement secure data connections between the UE and the EPC 40. The ePDG 42 provides the SWn interface 44 and acts as a termination node of IPsec (encrypted) tunnels at the SWn interface 44 established with the UE. The IPSec tunnels are used to perform secure transfer of authentication information and subscriber data over the untrusted interfaces and backhauls. The IPsec protocol suite uses cryptographic security services to protect communications over IP networks. The IPsec protocol suite supports network-level peer authentication, data origin authentication, data integrity, data confidentiality (encryption), and replay protection. The ePDG 42 is configured to implement the S2b interface 46 with either GPRS Tunneling Protocol (GTP) or Proxy Mobile IPv6 (PMIPv6) for the control plane 48 and user plane 49, respectively, toward the PGW 50.

The PGW 50 is further coupled to one or more external IP networks, for example, to the IMS 52 via an IMS Access Point Name (APN) over an SGi interface 54, and the Internet 56 via an Internet APN over an SGi interface 58. The PGW 50 may be further coupled to a SGW (not shown) over a GTP/PMIPv6 tunnel via an S5 interface.

The GPRS Tunneling Protocol (GTP) is a group of IP-based communication protocols used to carry General Packet Radio Service within GSM, UMTS and LTE networks. In 3GPP architectures, GTP and Proxy Mobile IPv6-based (PMIPv6) interfaces are specified on various interface points. GTP can be decomposed into separate protocols, GTP-C (control plane) and GTP-U (user plane). GTP-C is used within the packet core network for signaling between gateways to activate a session on a user's behalf (e.g., PDP context activation), to deactivate the same session, to adjust quality of service parameters, or to update a session for a subscriber who has just arrived from another Serving GPRS Support Node (SGSN). GTP-U is used for carrying user data within the packet core network and between the radio access network and the core network. The user data transported can be packets in any of IPv4, IPv6, or PPP formats. The GTP-U protocol is used over S1-U, X2, S4, S5, S8, S12, and S2b interfaces of the EPS. For some of the GTP-based interfaces (e.g., S5, S8, or S2b) between the gateways in the EPS network, an alternative option is to use PMIPv6. The user plane for PMIPv6-based interface uses the GRE encapsulation for transporting user data.

In operation, the ePDG function 42 terminates the IPsec tunnel on the SWn interface 44. For each IPSec packet arriving on the SWn, the ePDG 42, after applying the decryption keys, obtains the IP packet from the Encapsulating Security Payload (ESP) of the IPSec. This IP packet is then duplicated and encapsulated with a GTP-U header and transmitted to PGW 50 through either the GTP-U tunnel or GRE tunnel 49. The ePDG 42 may need to perform queuing and occasional buffering for fragment reassembly during this process. At the PGW 50, the GTP-U header or GRE encapsulation is stripped and local policy is applied before the IP packet is routed over the SGi interface 54 to the IMS network, or over the SGi interface 58 to the Internet or any other packet data network. Therefore, all IP packets received at the ePDG 42 are duplicated and encapsulated for transmission through the GTP or PMIPv6 tunnel 48 and 49. Similarly, the PGW 50 must strip the GTP-U/GRE header or de-encapsulate all of the received GTP-U tunnel data to retrieve the IP packet for routing and further routing, processing, and further transmission.

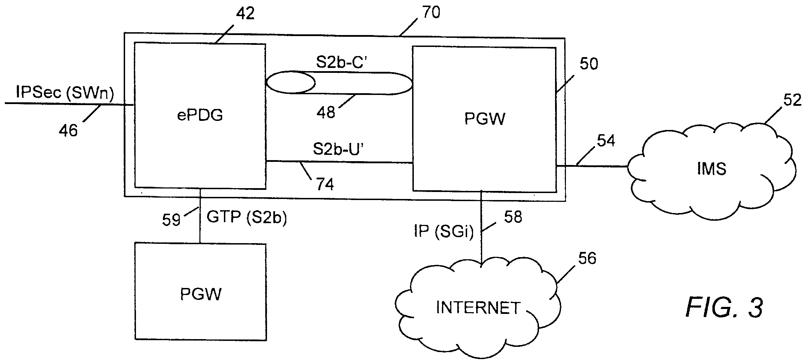

In many implementations of the EPC, some components or functions are combined within a single "box" or chassis. For example, the ePDG and PGW may be combined to form an integrated node. FIG. 3 is a simplified block diagram of an exemplary embodiment of co-located ePDG and PGW functionalities 42 and 50 configured to provide access to a UE over an untrusted non-3GPP access network. The co-located ePDG/PGW 70 combines the functions of both the ePDG 42 and the PGW 50 in one integrated or co-hosted component, box, chassis, or network node. Other functionalities such as SGW, MME, and SBC (Session Border Controller) may also be combined or co-located within the ePDG/PGW node 70. As before, the co-located ePDG/PGW 70 provides the SWn interface 46 and acts as a termination node of the IPsec tunnel. The co-located ePDG/PGW 70 conveys control plane data or control signaling 48 between the ePDG and PGW functionalities 42 and 50, which may be transmitted according to the GTP-C/PMIPv6 protocol or another suitable protocol (shown as S2b-C'). In the co-located ePDG/PGW module 70, the user plane data are conveyed between the ePDG 42 and PGW 50 via an S2b-U' interface 74 according to the IP protocol. The IP packets transmitted on the S2b-U' interface are not encapsulated.

The PGW functionality 50 of the co-located ePDG/PGW node 70 is further coupled to one or more external IP networks, for example, the PGW function may be coupled to an IMS 52 via an IMS Access Point Name (APN) over an SGi interface 54, and to the Internet 46 via an Internet APN over an SGi interface 58. The PGW 50 may be further coupled to a SGW (not shown) over a GTP/PMIPv6 tunnel via an S5 interface. Further, the ePDG functionality 42 of the co-located ePDG/PGW node 70 may be coupled to an external PGW or another gateway (not shown) over a GTP/ PMIPv6 tunnel 59 via an S2b interface.

In operation, the ePDG function 42 of the co-located ePDG/PGW module 70 terminates IPsec tunnel on the SWn interface 46. For each ESP of the IPSec arriving at the SWn interface 46 destined for the local or co-located PGW function 50, the ePDG function 42 is configured to consolidate policies from the ePDG function 42 and PGW function 50 and deliver the IP data packets to the PGW function 50 via the S2b-U' interface 74. The PGW 50 may then convey the IP packets to the IMS 52 over the SGi interface 54 or to the Internet 56 over the SGi interface 58. An internal routing function is configured to route the IP data packets to the external networks. Therefore, these IP packets are delivered without GTP/GRE tunnel encapsulation of the user plane data on the ePDG side and de-encapsulation of the user plane data on the PGW side. The control plane signaling data are transmitted as usual according to GTP-C/PMIPv6via the S2b-C' interface 48 to the PGW 50.

Operating in this manner, unnecessary GTP-U or GRE encapsulation and de-encapsulation at the S2b interface between the co-located ePDG and PGW functions can be eliminated. Further, IP packet duplication and transmission between the ePDG and PGW functions 42 and 50 can be avoided. Further savings in time and resources are also realized by eliminating queuing and occasional buffering for fragment reassembly.

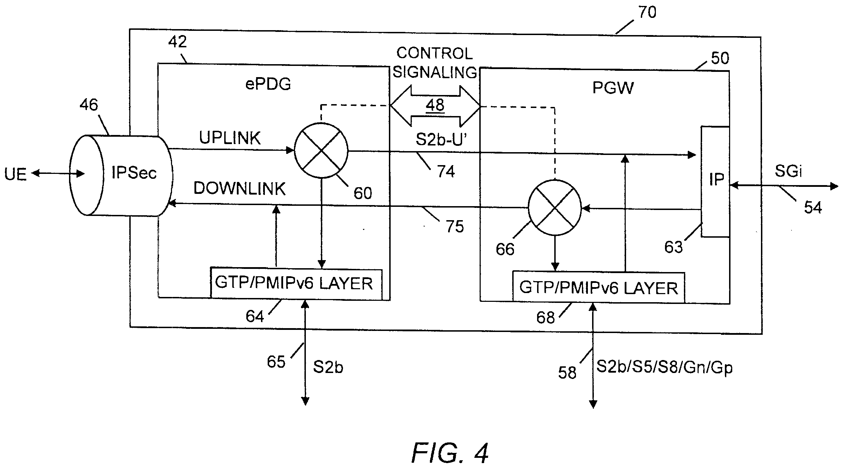

FIGURE 4 is a more detailed block diagram of an exemplary embodiment of co-located ePDG and PGW functions 70 according to the present disclosure. The co-located ePDG/PGW module 70 combines the functions of both the ePDG 42 and the PGW 50 in one integrated or co-hosted component, box, chassis, or network node. Other functionalities such as SGW, MME, and SBC (Session Border Controller) may also be combined or co-located within the ePDG/PGW node 70. As described above, the co-located ePDG/PGW node 70 acts as a termination node of the IPSec tunnel 46 at the SWn interface. In the uplink direction, an internal routing function 60 determines the destination of the IP packet from the IPSec tunnel. If the intended path of the IP packet is local, then the IP packet is transmitted directly to the PGW function 50 without encapsulation via the S2b-U' interface 74. The PGW function 50 may perform local packet processing 63 before transmitting the IP packet to external IP networks via one or more SGi interface 54. The signaling data is encapsulated according to the GTP-C/PMIPv6 protocol and transmitted over a suitable interface 48. If the internal routing function 60 determines that the destination of the IP packet received from the IPSec tunnel 46 is an external entity, then the IP packet is encapsulated by the GTP/PMIPv6 layer 64 and transmitted over the S2b interface 65 to an external PGW.

In the downlink direction, the IP packet received at the SGi interface 54 by the PGW function 50 of the co-located ePDG/PGW module 70 is provided to an internal routing function 66 to determine its path. If the received IP packet is destined locally, then it is transmitted over an interface 75 to the ePDG function 42, which then transmits the IP packet over the IPSec tunnel 46 to the UE. The IP packet at the interface 75 does not undergo any encapsulation. If on the other hand, the IP packet is destined for external entities, the routing function 66 routes the packet to GTP/PMIPv6 layer 68, which encapsulates the IP packet, according to the protocol used, for transmission over an S2b interface 58 (which may alternatively be S5, S8, Gn, or Gp interface) to an external entity such as ePDG, SGW, or SGSN.

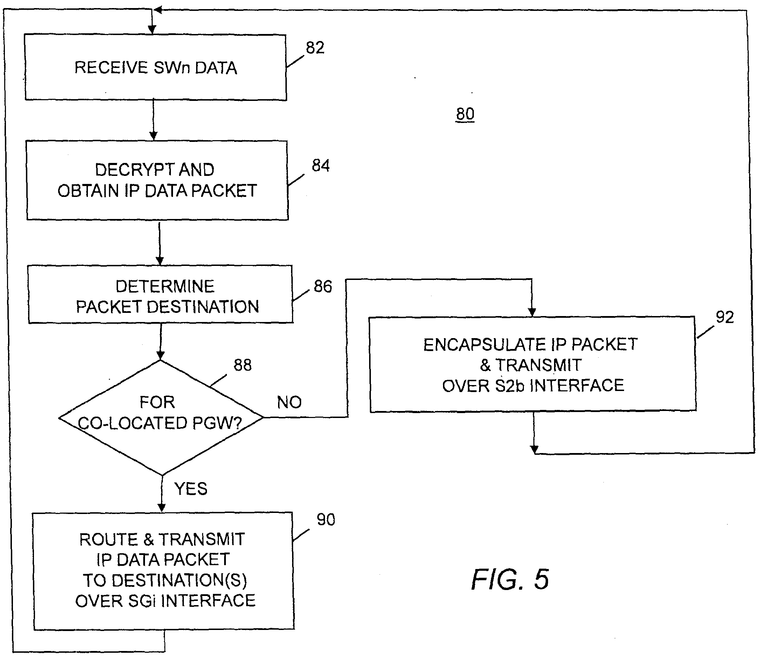

FIG. 5 is a simplified flowchart of an exemplary process 80 performed in the co-located ePDG/PGW 70 according to the present disclosure. In block 82, the ePDG 42 receives the IPSec ESP tunnel data on the SWn interface 46. In block 84, the data is decrypted and the IP packet is extracted from the ESP of the IPSec. In block 86, a determination is made for the IP packet's destination. In block 88, a determination is made as to whether the destination for the IP packet is the local or co-located PGW 50. If the destination is the co-located PGW function 50, then the IP packet is transmitted on the interface 74 to the PGW by the routing function 60. The PGW processes the packet sent by local ePDG and then routes it to the external IP network via the SGi interface 54. The destinations of the IP packets may include a number of external IP networks. If on the other hand, the IP packet is not destined for the co-located PGW function 50, then the IP packet is encapsulated in the GTP/PMIPv6 layer 64 as before and transmitted via the S2b interface to its destination by the ePDG function 42.

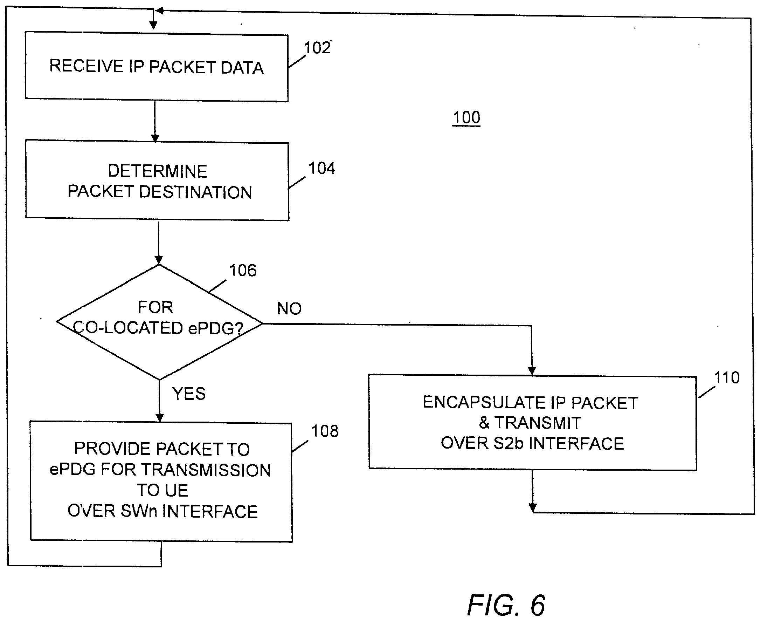

In the downlink direction, the process is generally reversed. FIG. 6 is a simplified flowchart of another exemplary process 100 performed in the co-located ePDG/PGW node 70 according to the present disclosure. In block 102, an IP packet is received at the PGW function 50 transported via the SGi interface 74. In block 104, the internal routing function 66 determines the packet's destination. If the intended destination for the packet is for the co-located ePDG function 42, then the IP packet is transmitted to the ePDG function 42 via the interface 75 for transmission to the UE over the IPSec tunnel, as shown in blocks 106 and 108. If the destination for the IP packet is external, then the PGW function 50 encapsulates the IP packet in the GTP/PMIPv6 layer 68 and transmits the data to its external destination according to the GTP/PMIPv6 protocol.

In this disclosure, the term "module" and "node" may be used to refer a physical circuit or collection of hardware components, a logical code module, functionality, and/or a combination of hardware and software entities.

The features of the present invention which are believed to be novel are set forth below with particularity in the appended claims. However, modifications, variations, and changes to the exemplary embodiments described above will be apparent to those skilled in the art, and the system and method described herein thus encompasses such modifications, variations, and changes and are not limited to the specific embodiments described herein.

## Claims

1. A co-located ePDG and PGW network node (70), comprising: an Evolved Packet Data Gateway, ePDG, functionality module (42); a Packet Data Network, PDN, Gateway, PGW, functionality module (50) co-located with the ePDG functionality module (42); the ePDG functionality module (42) having an SWn interface (46) configured for interfacing with an untrusted non-3GPP network; and the ePDG functionality module (42) having an interface (74) toward the PGW functionality module (50) configured for transporting IP packet data without encapsulation, **characterized in that**
the ePDG functionality module (42) includes an S2b-C' interface (48) toward the PGW functionality module (50) for transporting control plane signaling data according to one of GPRS Tunneling Protocol-Control Plane, GTP-C, and Proxy Mobile IPv6, PMIPv6, protocol.

2. The co-located ePDG and PGW network node (70) of claim 1, wherein the ePDG functionality module (42) further comprises a routing module (60) configured to route IP packet data to the PGW functionality module (50) or external entities.

3. The co-located ePDG and PGW network node (70) of claim 1, wherein the PGW functionality module (50) further comprises an SGi interface (54) toward an IMS Access Point Name, APN.

4. The co-located ePDG and PGW network node (70) of claim 1, wherein the PGW functionality module (50) further comprises an SGi interface (58) toward an Internet Access Point Name, APN.

5. The co-located ePDG and PGW network node (70) of claim 1, wherein the SWn interface (46) of the ePDG functionality module (42) is configured to use the IP Security, IPSec, protocol to transport IP packets.

6. The co-located ePDG and PGW network node (70) of claim 1, wherein the PGW functionality module (50) comprises a routing module (66) configured to receive IP packet data on the SGi interface (54) and route the received IP packet data to the ePDG functionality module (42) or external entities.

7. The co-located ePDG and PGW network node (70) of claim 1, wherein the PGW functionality module (50) further includes:
one of S5 and S8 interface configured for interfacing with an external Serving Gateway, SGW, using one of GPRS Tunneling Protocol, GTP, and Proxy Mobile IPv6, PMIPv6, protocol, or
wherein the PGW functionality module (50) further includes one of Gn and Gp interface configured for interfacing with an external Serving GPRS Support Node, SGSN, using GPRS Tunneling Protocol, GTP, or
wherein the ePDG functionality module (42) further includes an S2b interface (65) configured for interfacing with an external PGW using one of GPRS Tunneling Protocol, GTP, and Proxy Mobile IPv6, PMIPv6, protocol.

8. A method for co-located ePDG (42) and PGW (50) functions, comprising:
receiving IPSec data at an SWn interface (46) of an ePDG module (42); extracting IP packet data and control plane signaling data from the IPSec data; and routing the extracted IP packet data to a co-located PGW module (50) via an interface (74) without encapsulating the IP packet data, **characterized in that**
the method further comprises transporting the control plane signaling data according to one of GPRS Tunneling Protocol-Control Plane, GTP-C, and Proxy Mobile IPv6, PMIPv6, protocol, from the ePDG module (42) to the co-located PGW module (50), using an S2b-C' interface (48) of the ePDG module (42) toward the PGW module (50).

9. The method for co-located ePDG (42) and PGW (50) functions of claim 8, further comprising:
receiving an IP packet at an SGi interface (54) of a PGW module (50); and
routing the IP packet to the co-located ePDG module (42) without encapsulating the IP packet.

10. The method for co-located ePDG (42) and PGW (50) functions of claim 9, further comprising routing the extracted IP packet to one of a plurality of IP networks via the SGi interface (54).

11. The method for co-located ePDG (42) and PGW (50) functions of claim 9, further comprising routing the IP packet to an external entity via an S2b interface (65) of the ePDG module (42) according to one of GTP protocol and Proxy Mobile IPv6, PMIPv6, protocol.

12. The method for co-located ePDG (42) and PGW (50) functions of claim 9, further comprising encapsulating the extracted IP packet according to one of GPRS Tunneling Protocol, GTP, and Proxy Mobile IPv6, PMIPv6, protocol at the ePDG module (42), and transporting the data via an S2b interface (65) of the ePDG module (42) to an external node.

13. The method for co-located ePDG (42) and PGW (50) functions of claim 9, further comprising establishing an IPSec tunnel (46) with a User Equipment at the ePDG module (42).

## Patentansprüche

1. Co-lokalisierter ePDG- und PGW-Netzwerkknoten (70), umfassend: ein Evolved Packet Data Gateway(ePDG)-Funktionalitätsmodul (42), ein Packet Data Network(PDN)-Gateway(PGW)-Funktionalitätsmodul (50), das mit dem ePDG-Funktionalitätsmodul (42) colokalisiert ist, wobei das ePDG-Funktionalitätsmodul (42) eine SWn-Schnittstelle (46) aufweist, die dafür konfiguriert ist, eine Schnittstelle mit einem nicht vertrauenswürdigen Non-3GPP-Netzwerk zu bilden, und das ePDG-Funktionalitätsmodul (42) eine Schnittstelle (74) zu dem PGW-Funktionalitätsmodul (50) aufweist, die dafür konfiguriert ist, IP-Paket-Daten ohne Kapselung zu transportieren, **dadurch gekennzeichnet, dass**
das ePDG-Funktionalitätsmodul (42) eine S2b-C'-Schnittstelle (48) zu dem PGW-Funktionalitätsmodul (50) zum Transportieren von Kontrollschicht-Signalisierungsdaten gemäß einem der Protokolle GPRS Tunneling Protocol-Kontrollschicht (GTP-C) und Proxy Mobile IPv6 (PMIPv6) beinhaltet.

2. Co-lokalisierter ePDG- und PGW-Netzwerkknoten (70) nach Anspruch 1, wobei das ePDG-Funktionalitätsmodul (42) ferner ein Routingmodul (60) umfasst, das dafür konfiguriert ist, IP-Paket-Daten an das PGW-Funktionalitätsmodul (50) oder externe Einheiten zu senden.

3. Co-lokalisierter ePDG- und PGW-Netzwerkknoten (70) nach Anspruch 1, wobei das PGW-Funktionalitätsmodul (50) ferner eine SGi-Schnittstelle (54) zu einem IMS-Access Point Name (APN) umfasst.

4. Co-lokalisierter ePDG- und PGW-Netzwerkknoten (70) nach Anspruch 1, wobei das PGW-Funktionalitätsmodul (50) ferner eine SGi-Schnittstelle (58) zu einem Internet-Access Point Name (APN) umfasst.

5. Co-lokalisierter ePDG- und PGW-Netzwerkknoten (70) nach Anspruch 1, wobei die SWn-Schnittstelle (46) des ePDG-Funktionalitätsmoduls (42) dafür konfiguriert ist, das IP Security(IPSec)-Protokoll zum Transportieren von IP-Pakten zu verwenden.

6. Co-lokalisierter ePDG- und PGW-Netzwerkknoten (70) nach Anspruch 1, wobei das PGW-Funktionalitätsmodul (50) ein Routingmodul (66) umfasst, das dafür konfiguriert ist, IP-Paket-Daten an der SGi-Schnittstelle (54) zu empfangen und die empfangenen IP-Paket-Daten an das ePDG-Funktionalitätsmodul (42) oder externe Einheiten zu senden.

7. Co-lokalisierter ePDG- und PGW-Netzwerkknoten (70) nach Anspruch 1, wobei das PGW-Funktionalitätsmodul (50) ferner einschließt:
eine aus einer S5- und S8-Schnittstelle, die dafür konfiguriert ist, eine Schnittstelle zu einem externen Serving Gateway (SGW) unter Verwendung eines der Protokolle GPRS Tunneling Protocol (GTP) und Proxy Mobile IPv6 (PMIPv6) zu bilden, oder
wobei das PGW-Funktionalitätsmodul (50) ferner eine aus einer Gn- und Gp-Schnittstelle einschließt, die dafür konfiguriert ist, eine Schnittstelle zu einem externen Serving GPRS Support Node (SGSN) unter Verwendung des GPRS Tunneling-Protokolls (GTP) zu bilden, oder
wobei das ePDG-Funktionalitätsmodul (42) ferner eine S2b-Schnittstelle (65) einschließt, die dafür konfiguriert ist, eine Schnittstelle zu einem externen PGW unter Verwendung eines der Protokolle GPRS Tunneling Protocol (GTP) und Proxy Mobile IPv6 (PMIPv6) zu bilden.

8. Verfahren für co-lokalisierte ePDG- (42) und PGW-Funktionen (50), umfassend:
Empfangen von IPSec-Daten an einer SWn-Schnittstelle (46) eines ePDG-Moduls (42), Extrahieren von IP-Paket-Daten und Kontrollschicht-Signalisierungsdaten aus den IPSec-Daten und Senden der extrahierten IP-Paket-Daten an ein co-lokalisiertes PGW-Modul (50) über eine Schnittstelle (74) ohne Kapselung der IP-Paket-Daten, **dadurch gekennzeichnet, dass**
das Verfahren ferner das Transportieren der Kontrollschicht-Signalisierungsdaten gemäß einem der Protokolle GPRS Tunneling Protocol-Kontrollschicht (GTP-C) und Proxy Mobile IPv6 (PMIPv6) von dem ePDG-Modul (42) zu dem co-lokalisierten PGW-Modul (50) unter Verwendung einer S2b-C'-Schnittstelle (48) des ePDG-Moduls (42) zu dem PGW-Modul (50) umfasst.

9. Verfahren für co-lokalisierte ePDG- (42) und PGW-Funktionen (50) nach Anspruch 8, das ferner umfasst:
Empfangen eines IP-Pakets an einer SGi-Schnittstelle (54) eines PGW-Moduls (50) und
Senden des IP-Pakets an das co-lokalisierte ePDG-Modul (42) ohne Kapselung des IP-Pakets.

10. Verfahren für co-lokalisierte ePDG- (42) und PGW-Funktionen (50) nach Anspruch 9, das ferner das Senden des extrahierten IP-Pakets an eines aus einer Vielzahl von IP-Netzwerken über die SGi-Schnittstelle (54) umfasst.

11. Verfahren für co-lokalisierte ePDG- (42) und PGW-Funktionen (50) nach Anspruch 9, das ferner das Senden des IP-Pakets an eine externe Einheit über eine S2b-Schnittstelle (65) des ePDG-Moduls (42) gemäß einem der Protokolle GTP und Proxy Mobile IPv6 (PMIPv6) umfasst.

12. Verfahren für co-lokalisierte ePDG- (42) und PGW-Funktionen (50) nach Anspruch 9, das ferner das Kapseln des extrahierten IP-Pakets gemäß einem der Protokolle GPRS Tunneling Protocol (GTP) und Proxy Mobile IPv6 (PMIPv6) am ePDG-Modul (42) und das Transportieren der Daten über eine S2b-Schnittstelle (65) des ePDG-Moduls (42) an einen externen Knoten umfasst.

13. Verfahren für co-lokalisierte ePDG- (42) und PGW-Funktionen (50) nach Anspruch 9, das ferner das Einrichten eines IPSec-Tunnels (46) mit einem Nutzergerät (User Equipment) am ePDG-Modul (42) umfasst.

## Revendications

1. Nœud (70) de réseaux ePDG et PGW co-implantés, comprenant : un module de fonctionnalité ePDG (passerelle de données par paquets évoluée) (42) ; un module de fonctionnalité PGW (passerelle de réseau de données par paquets (PDN)) (50) co-implanté avec le module de fonctionnalité ePDG (42) ; le module de fonctionnalité ePDG (42) ayant une interface SWn (46) configurée pour s'interfacer avec un réseau non 3GPP non sécurisé ; et le module de fonctionnalité ePDG (42) ayant une interface (74) vers le module de fonctionnalité PGW (50) configuré pour transporter des données par paquets IP sans encapsulation, **caractérisé en ce que**
le module de fonctionnalité ePDG (42) comprend une interface S2b-C' (48) vers le module de fonctionnalité PGW (50) pour transporter des données de signalisation d'un plan de contrôle vers un parmi un protocole de tunnellisation GPRS-plan de contrôle, GTP-C et un protocole proxy mobile IPv6, PMIPv6.

2. Nœud (70) de réseaux ePDG et PGW co-implantés selon la revendication 1, dans lequel le module de fonctionnalité ePDG (42) comprend en outre un module de routage (60) configuré pour router des données par paquets IP vers le module de fonctionnalité PGW (50) ou des entités externes.

3. Nœud (70) de réseaux ePDG et PGW co-implantés selon la revendication 1, dans lequel le module de fonctionnalité PGW (50) comprend en outre une interface SGi (54) vers un nom de point d'accès (APN) IMS.

4. Nœud (70) de réseaux ePDG et PGW co-implantés selon la revendication 1, dans lequel le module de fonctionnalité PGW (50) comprend en outre une interface SGi (58) vers un nom de point d'accès (APN) internet.

5. Nœud (70) de réseaux ePDG et PGW co-implantés selon la revendication 1, dans lequel l'interface SWn (46) du module de fonctionnalité ePDG (42) est configuré pour utiliser le protocole de sécurité IP, IPSec, pour transporter des paquets IP.

6. Nœud (70) de réseaux ePDG et PGW co-implantés selon la revendication 1, dans lequel le module de fonctionnalité PGW (50) comprend un module de routage (66) configuré pour recevoir des données par paquets IP sur l'interface SGi (54) et router les données par paquets IP vers le module de fonctionnalité ePDG (42) ou des entités externes.

7. Nœud (70) de réseaux ePDG et PGW co-implantés selon la revendication 1, dans lequel le module de fonctionnalité PGW (50) comprend en outre :
une des interfaces S5 et S8 configurées pour s'interfacer avec une passerelle de desserte externe, SGW, utilisant un parmi un protocole de tunnellisation GPRS, GTP, et un protocole de proxy mobile IPv6, PMIPv6, ou
dans lequel le module de fonctionnalité PGW (50) comprend en outre une des interfaces Gn et Gp configurées pour s'interfacer avec un nœud de support GPRS de desserte externe, SGSN, utilisant un protocole de tunnellisation GPRS, GTP, ou
dans lequel le module de fonctionnalité ePDG (42) comprend en outre une interface S2b (65) configurée pour s'interfacer avec une PGW externe utilisant un parmi un protocole de tunnellisation GPRS, GTP, et un protocole de proxy mobile IPv6, PMIPv6.

8. Procédé pour des fonctions ePDG (42) et PGW (50) co-implantées, comprenant : la réception de données IPSec à une interface SWn (46) d'un module ePDG (42) ; l'extraction de données par paquets IP et de données de signalisation d'un plan de contrôle depuis les données IPSec ; et le routage des données par paquets IP extraites vers un module PGW co-implanté (50) par une interface (74) sans encapsulation des données par paquets IP, **caractérisé en ce que**
le procédé comprend en outre le transport des données de signalisation d'un plan de contrôle selon un parmi un protocole de tunnellisation GPRS-plan de contrôle, GTP-C, et un protocole de proxy mobile IPv6, PMIPv6, du module ePDG (42) vers le module PGW co-implanté (50), utilisant une interface S2b-C' (48) du module ePDG (42) vers le module PGW (50).

9. Procédé pour les fonctions ePDG (42) et PGW (50) co-implantées selon la revendication 8, comprenant en outre :
la réception d'un paquet IP à une interface SGi (54) d'un module PGW (50) ; et
le routage du paquet IP vers le module ePDG (42) co-implanté sans encapsulation du paquet IP.

10. Procédé pour les fonctions ePDG (42) et PGW (50) co-implantées selon la revendication 9, comprenant en outre le routage du paquet IP extrait vers un d'une pluralité de réseaux IP par l'interface SGi (54).

11. Procédé pour les fonctions ePDG (42) et PGW (50) co-implantées selon la revendication 9, comprenant en outre le routage du paquet IP vers une entité externe par une interface S2b (65) du module ePDG (42) selon un parmi un protocole GTP et un protocole de proxy mobile IPv6, PMIPv6.

12. Procédé pour les fonctions ePDG (42) et PGW (50) co-implantées selon la revendication 9, comprenant en outre l'encapsulation du paquet IP extrait selon un parmi un protocole de tunnellisation GPRS, GTP, et un protocole de proxy mobile IPv6, PMIPv6, au module ePDG (42) et le transport des données par une interface S2b (65) du module ePDG (42) vers un nœud externe.

13. Procédé pour les fonctions ePDG (42) et PGW (50) co-implantées selon la revendication 9, comprenant en outre l'établissement d'un tunnel IPSec (46) avec un équipement d'utilisateur au module ePDG (42).
